# EUROPEAN PATENT SPECIFICATION

(11) **EP 3 824 464 B1**
(45) Date of publication and mention of the grant of the patent: **17.07.2024**
(21) Application number: 19837231.0
(22) Date of filing: 18.07.2019
(51) Int. Cl.: G10L 19/24, G10L 19/20, G10L 19/22, H04R 1/40, H04S 7/00, G10L 21/0208, G10L 21/0216, H04N 21/4728, H04N 21/439, H04N 21/81, H04N 21/431, G10L 19/008, H04N 21/422

(54) **CONTROLLING AUDIO FOCUS FOR SPATIAL AUDIO PROCESSING**
STEUERUNG DES AUDIOFOKUS FÜR RÄUMLICHE AUDIOVERARBEITUNG
COMMANDE DE LA CONCENTRATION AUDIO POUR LE TRAITEMENT AUDIO SPATIAL

(30) Priority: 20.07.2018 GB 201811847
(43) Date of publication of application: 26.05.2021
(73) Proprietor: Nokia Technologies Oy, 02610 Espoo (FI)
(72) Inventor: LAAKSONEN, Lasse Juhani, 33210 Tampere (FI); RÄMÖ, Anssi Sakari, 33720 Tampere (FI); VASILACHE, Adriana, 33580 Tampere (FI)
(74) Representative: Nokia EPO representatives
(86) International application number: PCT/FI2019/050550
(87) International publication number: WO 2020/016484

(56) References cited:
- WO-A1-2011/020065
- WO-A1-2018/127447
- GB-A- 2 550 877
- US-A1- 2003 161 484
- US-A1- 2014 086 414
- US-A1- 2014 095 178
- US-A1- 2014 105 416
- US-A1- 2014 350 935
- US-A1- 2015 255 076
- US-A1- 2018 033 440

## Description

### Field

The present application relates to apparatus and methods for encoding audio and/or speech signals and in particular the encoding of multiple audio streams.

### Background

Spatial audio systems attempt to capture the salient parts of a sound field and reproduce a representation of the captured sound field in some form such that a listener can perceive the spatial characteristics of the original sound scene.
A typical audio scene comprising audio events can be captured efficiently by using multiple microphones in an array. Spatial audio playback systems, such as the commonly used 5.1 channel setup, 3D audio setups such as 7.1 +4, or the alternative binaural signal with headphone listening, can be applied for representing sound sources in different directions.

Audio focus technologies can be used to focus audio capture to a selected direction. This may be implemented where there are many sound sources around a capturing device and only sound sources in a particular direction are of interest or sound sources in a particular direction are of higher interest. A typical situation for example may arise in a concert or public event where any interesting content may be found in front of the device and disturbing sound sources such as audience noise surround the rest of the device. However, the problem with existing approaches to audio focus is that there is no control for the recipient over the capture device for example in a live communication over a practical transmission channel with bandwidth constraints (such as for example a 3GPP immersive voice channel). In other words a typical spatial audio coding system which is arranged to capture an audio focused scene tends to be permanently configured to only capture an audio focused stream all of the time, for delivery to the subsequent audio encoder, leaving the end user with little or no control over the use of audio focus.

Patent application publication US2014095178 discloses a method of multi-object audio signal coding, where audio signals are downmixed and supplementary information is extracted. The supplementary information includes header information and spatial cue information for each of the audio signals.

### Summary

This invention proceeds from the consideration that it is desirable for an end user to have control over an audio focus capture device in order to provide a recipient controlled audio focus capture experience of the audio scene. Existing audio capture devices which are arranged to capture a particular focus of the audio scene do so by typically producing an audio stream which is "focussed" on a particular audio event within the audio scene. This inevitably results in an encoded audio focussed stream which is not configurable to the recipient. Therefore in the event of a user wanting to control the level of audio focus or indeed whether the user desires an audio focus effect at all there is no mechanism built into the audio focus encoded stream that would allow him or her to exercise any degree of control. Prior art solutions can overcome this disadvantage by capturing and encoding, in addition to an audio focussed stream, a "main" immersive audio stream (or streams) without any audio focussing thereby providing an alternative audio scene experience which the end user can access. However, such solutions will typically add to the computational complexity and particularly the required transmission bandwidth. Consequently it is advantageous to allow a receiver a degree of control over the audio focussing whilst capturing the audio scene, rather than having to rely on a further captured audio stream to provide an alternative rendering of the audio scene.

Accordingly, there is provided a first aspect in which there is a method comprising: adding an audio signal type attribute to an audio focus object, wherein the audio focus object comprises a downmixed audio difference signal and direction information relating to an audio focus direction associated with the audio focus object, and wherein the audio signal type attribute identifies that an encoded audio signal is an audio focus object, wherein the method is characterised in that the downmixed audio difference signal is formed by: receiving at least two microphone audio signals for audio signal processing, wherein the audio signal processing comprises a spatial signal processing and beamforming processing; determining an audio scene signal based on the spatial signal processing; determining an audio focused signal based at least in part on the beamforming processing; determining a difference signal (210) between the audio scene signal and the audio focused signal; and means for downmixing (209) the difference signal (210).

The method may further comprise adding an audio focus object priority attribute to the audio focus object, wherein the audio focus priority attribute indicates an encoding and/or decoding priority of the audio focus object relative to an encoding and/or decoding priority of other audio focus objects.

The method may further comprise adding a further audio signal type attribute and further audio focus object priority attribute to a further audio focus object, wherein the further audio focus object comprises a further downmixed audio difference signal and further direction information relating to an audio focus direction associated with the further audio focus object; and encoding the downmixed audio difference signal in preference to the further downmixed audio difference signal in the case the audio focus object priority attribute of the audio focus object indicates a higher order of priority than the further audio focus object priority attribute of the further audio focus object.

There is provided according to a second aspect an apparatus comprising: means for adding an audio signal type attribute to an audio focus object, wherein the audio focus object comprises a downmixed audio difference signal and direction information relating to an audio focus direction associated with the audio focus object, and wherein the audio signal type attribute identifies that an encoded audio signal is an audio focus object, wherein the apparatus is characterised by having: means for receiving at least two microphone audio signals for audio signal processing, wherein the audio signal processing comprises a spatial signal processing and beamforming processing; means for determining an audio scene signal based on the spatial signal processing; means for determining an audio focused signal based at least in part on the beamforming processing; means for determining a difference signal between the audio scene signal and the audio focused signal; and means for forming the downmixed audio difference signal by downmixing the difference signal.

The apparatus may further comprise means for adding an audio focus object priority attribute to the audio focus object, wherein the audio focus priority attribute indicates an encoding and/or decoding priority of the audio focus object relative to an encoding and/or decoding priority of other audio focus objects.

The apparatus may further comprise: means for adding a further audio signal type attribute and further audio focus object priority attribute to a further audio focus object, wherein the further audio focus object comprises a further downmixed audio difference signal and further direction information relating to an audio focus direction associated with the further audio focus object; and means for encoding the downmixed audio difference signal in preference to the further downmixed audio difference signal in the case the audio focus object priority attribute of the audio focus object indicates a higher order of priority than the further audio focus object priority attribute of the further audio focus object.

The priority indicated by the audio focus object priority attribute and the priority indicated by the further audio focus object priority attribute are at least in part determined via a user input.

The priority indicated by the audio focus object priority attribute and the priority indicated by the further audio focus object priority attribute may at least in part determined by an available transmission bandwidth of a communication channel. The audio signal type attribute, the direction information and the audio focus object priority attribute may be part of a metadata structure of the audio focus object.

### Summary of the Figures

For a better understanding of the present application, reference will now be made by way of example to the accompanying drawings in which:
Figure 1a shows schematically an audio focused signal generator according to embodiments;
Figure 1b shows schematically a spatial audio scene signal generator according to embodiments;
Figure 2 shows schematically a system for creating audio focus objects;
Figure 3 shows schematically a system for encoding audio focus objects and a baseline spatial audio scene signal;
Figure 4 shows schematically a system for decoding encoded audio focus objects and an encoded spatial audio scene signal; and
Figure 5 shows schematically an example apparatus suitable for implementing embodiments.

### Embodiments of the Application

The following describes in further detail suitable apparatus and possible mechanisms for the provision of controlling the focus of an audio focus capture device, of which a particular application is the delivery of a spatial immersive audio experience. In the following examples, audio signals and audio capture signals are described. However it would be appreciated that in some embodiments the apparatus may be part of any suitable electronic device or apparatus configured to capture an audio signal or receive the audio signals and other information signals. The audio signal type attribute, the direction information and the audio focus object priority attribute may be part of a metadata structure of the audio focus object.

The metadata structure may further comprise an audio focus object priority attribute, and wherein the audio focus priority attribute relates to the decoding order of priority of the audio focus object compared to the decoding order of priority of other audio focus objects.

### Summary of the Figures

For a better understanding of the present application, reference will now be made by way of example to the accompanying drawings in which:

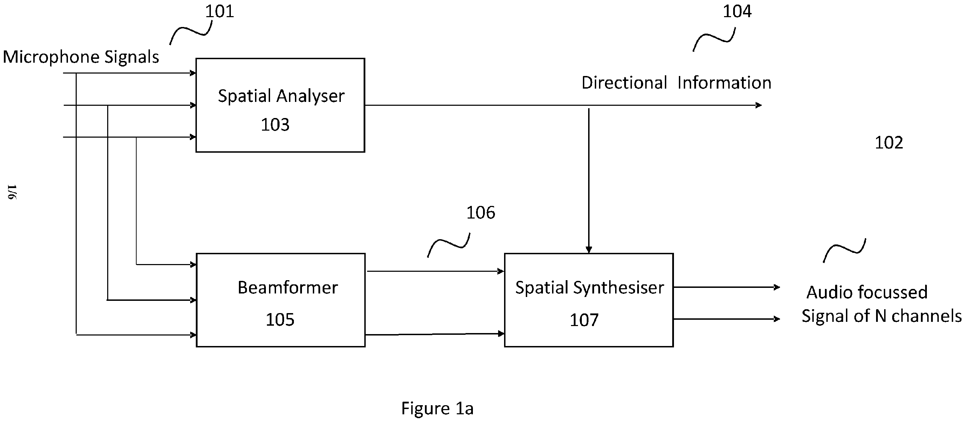

Figure 1a shows schematically an audio focused signal generator according to embodiments;

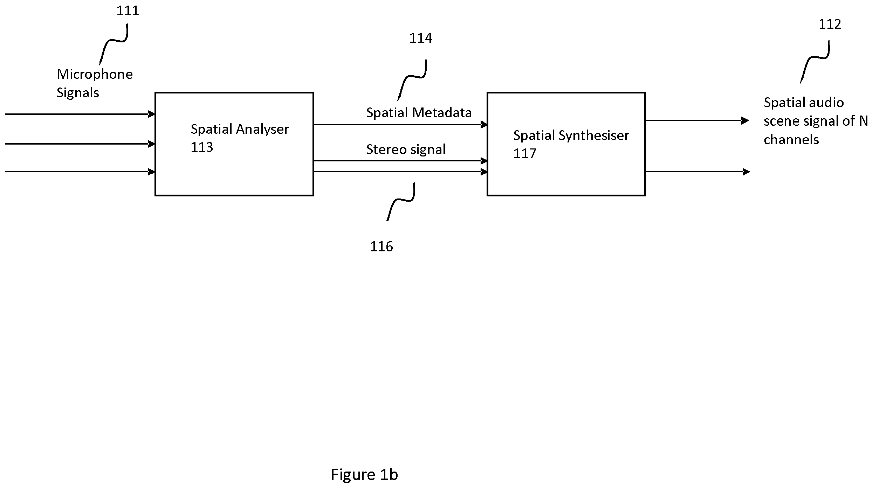

Figure 1b shows schematically a spatial audio scene signal generator according to embodiments;

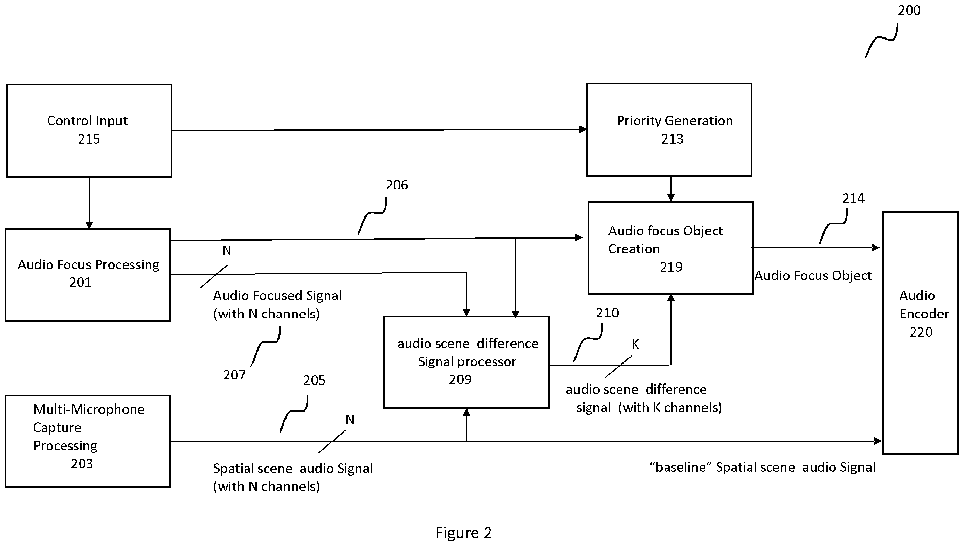

Figure 2 shows schematically a system for creating audio focus objects;

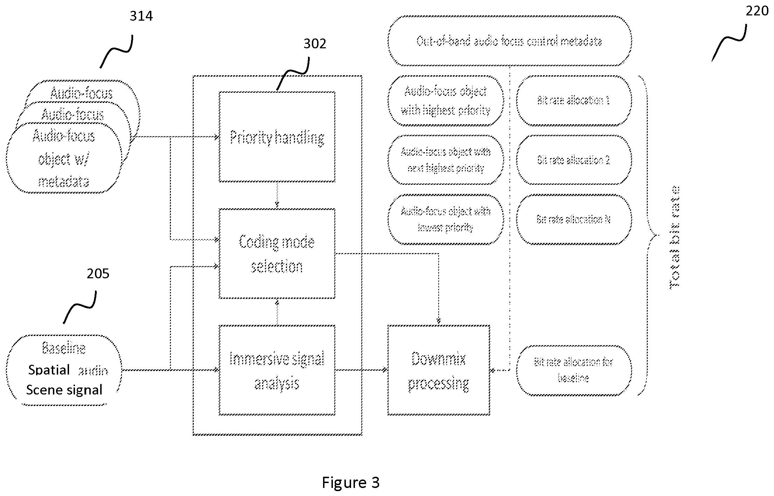

Figure 3 shows schematically a system for encoding audio focus objects and a baseline spatial audio scene signal;

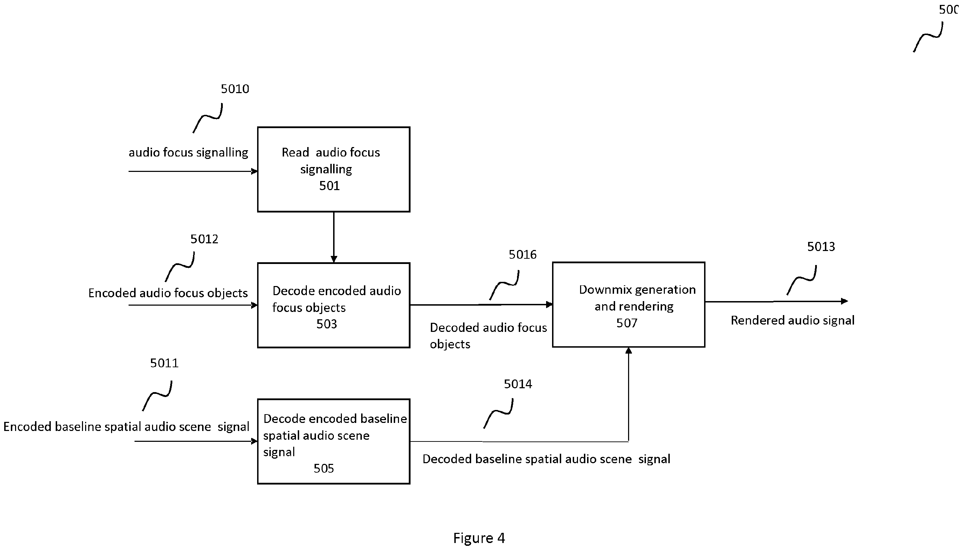

Figure 4 shows schematically a system for decoding encoded audio focus objects and an encoded spatial audio scene signal; and

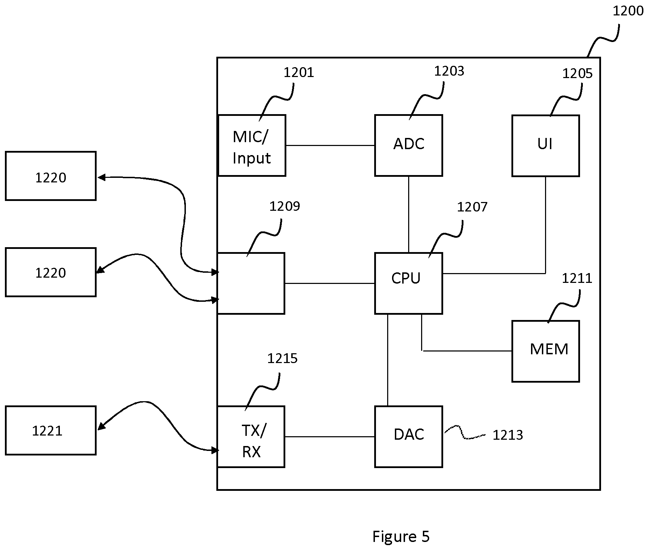

Figure 5 shows schematically an example apparatus suitable for implementing embodiments.

### Embodiments of the Application

The following describes in further detail suitable apparatus and possible mechanisms for the provision of controlling the focus of an audio focus capture device, of which a particular application is the delivery of a spatial immersive audio experience. In the following examples, audio signals and audio capture signals are described. However it would be appreciated that in some embodiments the apparatus may be part of any suitable electronic device or apparatus configured to capture an audio signal or receive the audio signals and other information signals.

Figure 1 shows an audio signal capture processing system capable of capturing a focussed audio signal. In Figure 1 the audio scene can be captured by at least two microphones to produce an input of at least two microphone signals 101, however any suitable number of microphone audio signals may be used. The microphone audio signals 101 are passed to a spatial analyser 103 and to a beamformer 105.

The audio focus system shown in Figure 1a may be independent of the audio signal capture apparatus which comprises the microphones used to capture the microphone audio signals and as such is independent from the capture apparatus form factor. In other words there may also be a great variation on the number, type and arrangement of microphones in the system.

The system shown in Figure 1a shows a beamformer 105 configured to receive the microphone audio signals 101. The beamformer 105 may be configured to apply a beamforming operation on the microphone audio signals and to generate a stereo audio signal output reflecting a left and right channel output based on the beamformed microphone audio signals. The beamforming operations are used to emphasize signals arriving from at least one selected focus direction. This may further be considered to be an operation which attenuates sounds arriving from 'other' directions. Beamforming methods such as is presented for example in US-20140105416 (which is incorporated herein in its entirety by reference). The stereo audio signal output 106 may be passed to a spatial synthesiser 107.

The system shown in Figure 1a further shows a spatial analyser 103 configured to receive the microphone audio signals 101. The spatial analyser 103 may be configured to analyse the directions of dominating sound sources for every timefrequency band. This directional information 104 may then be passed to a spatial synthesiser 107.

The system shown in Figure 1a further shows the generation of spatial synthesis and furthermore the application of a spatial filtering operation on the stereo audio signals 106 following the beamforming. The system shown in Figure 1 a furthermore shows a spatial synthesiser 107 configured to receive the directional information 104 and the stereo audio signals 106. The spatial synthesiser 107 may for example apply a spatial filtering to further emphasize sound sources in a direction of interest to produce the focused audio signal 102. This is done by processing the results of the analysis stage performed in the spatial analyser 103 in the synthesiser to amplify sources in a preferred direction and attenuating other sources. Spatial synthesis and filtering methods are presented for example in US patent applicationsUS20120128174, US20130044884 and US-20160299738. Spatial synthesis can be applied to any suitable spatial audio formats such as stereo (binaural) audio or 5.1 multichannel audio.

Figure 1b shows an audio signal capture processing system capable of capturing a spatial immersive audio signal, that is an audio capture system which may not be specifically arranged to capture an audio focused stream but rather an audio capture system arranged to capture a spatial immersive audio stream of the audio scene. An audio signal capture processing system capable of capturing a spatial immersive audio signal may be described for example in US patent application US20140086414. The system of Figure 2 comprises a spatial analyser 113 arranged to receive the microphone audio signals 111. The spatial analyser 113 may be configured to analyse the directions of dominating sound sources for every frequency band. This information which can be termed as spatial metadata 114 may then be passed to a spatial synthesiser 117 in order to produce the spatial immersive audio signal 112. Furthermore the audio signals 111 can compressed by generating a stereo signal 116, which in the simplest may be two input microphone audio signals. For example, these two input microphone audio signals can be selected such that the distance between the two microphones is close to the average distance between human
ears. In addition, one can be on the left-hand side of a recording device while the other one can be on the right-hand side of a recording device according to a typical orientation in which the device is held or applied to capture audio.

The general principle herein may be viewed as using audio capture processing systems such as that shown by Figures 1a and 1b to generate a spatial immersive audio scene signal (to be also known as a baseline immersive audio signal) and an audio focussed signal, and then use these signals to generate an audio focus object with accompanying metadata. To this end Figure 2 depicts an audio format processor 200 for generating a baseline immersive audio signal and an audio focus object with directional audio focus metadata.

With regard to Figure 2 the audio scene can be captured with the audio focus processor 201 and the multi-microphone capture processor 203. In embodiments the functional processing block 201 can take the form of the audio focus capture processing system such as that shown in Figure 1a in which the output is an audio focused stream/signal 102 and accompanying audio directional information 104 which are depicted in Figure 2 as the audio focused signal 207 with the audio focus direction as metadata 206. The functional processing block 203 can take the form of an audio signal capture processing system shown in Figure 1b capable of capturing an immersive audio signal. To be clear the output from the audio signal capture processing system shown in Figure 1b can be the output from the spatial synthesiser 117 which forms the spatial synthesis output in other words the spatial audio scene signal depicted as 205 in Figure 2. The audio focused signal 207 and the spatial audio scene signal 205 are typically formatted the same, and they can be formatted, e.g., as a channel-based representation, a scene-based representation (ambisonics), or a parametric spatial audio representation.

An audio focus object stream 214 can be formed by taking a difference between the spatial audio scene signal 205 and the audio focused signal 207. In figure 2 the formation of the difference between the spatial audio scene signal 205 and the audio focused signal 207 can be represented as the functional block audio scene difference signal processor 209. The difference signal can at least provide the audio focus effect of the main direction of audio focus within the immersive spatial audio scene, the effect being a result of the main lobe of the audio focused signal 207. In embodiments the audio scene difference signal 210 can be obtained using subtraction process in the audio scene difference signal processor 209. The subtraction process performed by the audio scene difference signal processor 209 may also consider the spatial properties of the spatial audio scene signal 205 and the audio focused signal 207, this may be referred to as spatial subtraction.

It is to be understood in embodiments that the audio scene difference signal 210 can also be a multichannel audio signal having a fewer number of channels K than the number of channels as each of the spatial audio scene signal 205 and the audio focused signal 207. With respect to Figures 2 the spatial audio scene signal 205 and the audio focused signal 207 are each depicted as comprising of N channel signals.

Spatial subtraction may take the form of using spatial metadata to determine whether particular frequency bins from the audio focused signal 207 and spatial audio scene signal 205 are subtracted from each other. For instance the audio focus direction 206 which forms part of the spatial metadata can be used to select the most relevant K channels over which the audio focused signal 207 and the spatial audio scene signal 205 are subtracted. In other words a subset of K channels of the audio focused signal 207 and the spatial audio scene signal 205 can be subtracted from each other to form the K channel audio scene difference signal 210. In embodiments the K channels over which the audio scene difference signal 210 is formed can be the K channels which are spatially the closest to the audio focus direction. To that end the audio focus direction 206 can be used to select those channels which lie within the direction of audio focus.

In the audio scene difference signal processor 209 the audio scene difference signal 210 can be formed by subtracting particular frequency bins of the spatial audio scene signal 205 from the corresponding frequency bins of the audio focused signal 207, for instance, a channel of the spatial audio scene signal 205 from the corresponding channel of the audio focused signal 207. This difference process can be performed for all N channels or all selected K channels on a channel by channel basis. It is to be noted that the channel subtraction process can be performed in either the frequency or time domains.

It is also to be appreciated in embodiments that there may be more than one audio focus direction and second audio focus direction may involve having a second subset of channels over which the subtraction process is applied.

Returning to Figure 2 it can be seen that the audio scene difference signal 210 is passed to the audio focus object creation functional block or audio focus object creator 219.

The audio focus object creator 219 may be arranged to form at least part of the audio focus object by performing a downmixing operation on the N (or K) channels of the audio scene difference signal 210 (and the associated spatial metadata where available). In some instances this may comprise mixing a subset of the channels of the audio scene difference signal 210 rather than all N (or K) channels. In a particular instance the subset of channels may comprise the channels of the audio scene difference signal 210 which correspond to each of a plurality of audio focus directions in order to derive audio focus object streams by considering each such subset separately. In other words the downmixing operation may be arranged to downmix channels of the audio scene difference signal 210 which lie within a particular audio focus direction. Consequently, in the case that there is more than one audio focus direction then the downmixing operation can involve more than two subsets of audio channels of the audio scene difference signal 210.

An audio focus object 214 as formed by the audio focus object creator 219 can comprise the down mixed audio scene difference signal together with directional metadata. The down mixed audio scene difference signal is typically a mono signal. In this regard the directional metadata 206 can be modified by the audio focus object creator 219 to incorporate (or add) additional audio-focus metadata comprising an audio signal type attribute and/or a priority attribute (an audio focus object priority attribute.) The audio focus object priority attribute can be incorporated into the metadata structure dependent, e.g., on a user input. For instance the audio focus object priority attribute, as driven by a user control input, can relate to the presence of directional components of an audio focus object relating to at least one audio focus direction as provided, e.g., using a control input 215. In other words the priority attribute allows for each audio focus object to have a priority value assigned to it. The priority value may be related to the relative importance of a particular audio focus object compared to other audio focus objects. In embodiments the audio focus object priority attribute and audio signal stream type attribute can be incorporated into the accompanying metadata structure by adding the following additional fields.

| **Name** | **Type** | **Value** | **Description** |
|---|---|---|---|
| ivas-af-streampriority | Short | [1, N_MAX_INPUT _STREAMS] | The priority, or importance of availability, of an audio-focus object stream at the recipient device. A higher priority (a smaller value) stream is more important for delivery, e.g, under bit rate constraint, and a lower priority stream (a larger value) should be dropped first. |
| ivas-af-stream-type | Boolean | 0 / 1 | The stream is an audio-focus stream (1) or it is not one (0) in the current frame(s). |

With respect to the above table the term ivas-af-stream priority is a moniker for the audio focus object priority attribute and ivas-af-stream-type is a moniker for the audio signal type attribute in which "ivas" refers to Immersive Voice and Audio Services and "af" refers to Audio Focus.

The generation of the priority value for the audio focus object priority attribute is depicted in Figure 2 by the priority generation function 213. It can be seen that the priority generation function 213 can be driven at least by a control input 215, which as discussed above, can comprise an input from a user.

The control input 215 can be arranged to control the audio focus processing 201 so that the audio format processor 200 can be instructed or arranged to capture a number of different audio focused streams 207, with each audio focused stream having a different focus of the audio events within the audio scene. As eluded to above the plurality of different audio focused streams 207 (or audio focus objects 214) may be prioritised by a user such that the user can set the value of the audio focus object priority attribute and therefore the respective priority information conveyed as part of the metadata structure. For instance the user may set the value of the audio focus object priority attribute in accordance with a preference for a particular audio event within the audio scene.

To be clear, for each audio focused stream 207 the audio format processor 200 generates an audio scene difference signal 210 in relation to the spatial audio scene signal 205. The audio scene difference signal 210 is then downmixed to give, e.g., a mono signal which is formed into an audio focus object 214 by adding a metadata structure comprising audio directional information 206 (e.g., an audio focus direction), audio focus object priority attribute and audio signal stream type attribute.

Additionally, some embodiments may only have a single audio focused stream 207 in which case a plurality of audio object streams may be derived by considering each of a plurality of audio focus directions within the single audio focused stream as a separate audio focus object stream.

In embodiments the spatial audio scene signal 205 may be termed a baseline audio scene signal since an audio scene difference signal 210 is generated relative to the spatial audio scene signal 205. To be clear there can be a number of audio scene difference signals 210, each audio scene difference signal being generated by the difference between one of the plurality of audio focused streams 207 and the baseline audio scene signal 205. Therefore in embodiments the number of audio scene difference signals 210 can be the same as the number of audio focused streams 207.

Each audio scene difference signal 210 may be downmixed and combined with metadata to form an audio focus object relating to a particular audio focused signal. As stated before this combination may take place as part of the audio object creation functional block 219. In addition to the priority information attribute the metadata may also comprise an additional structure type conveying information relating to a rendering direction of the audio focus object 214. Therefore the output from the audio object creation functional block may be a number audio focus objects, in which each audio focus object corresponds to a downmixed audio scene difference signal.

Consequently, the output of the audio format processor 200 may comprise the baseline spatial audio signal 205 and a plurality of audio focus objects, with each audio focus object 214 having a metadata component conveying information about the particular focus or audio direction associated with the audio focus object 214,an audio focus object priority attribute which can be based on a user input and an audio signal type attribute indicating that the audio signal is an audio focus object signal.

With reference to Figure 2, the baseline spatial audio scene signal (or spatial audio scene signal) 205 and a plurality of audio focus objects (of which Figure 2 depicts one of the audio focus objects 214) may then form the input signals to a subsequent audio encoder processing stage, depicted in Figure 2 as the audio encoder 220. In some embodiments, the spatial audio scene signal 205 can be transformed into another immersive audio format before provided as input to the audio encoder 220.

Figure 3 shows in further detail the processing stages of the audio encoder 220.

The audio encoder 220 is shown with a priority handler 302 which may be arranged to determine a priority order for the encoding and transmission of the plurality of audio focus objects depicted as 314 in Figure 3. To be clear a particular instance of an audio focus object is depicted as 214 in Figure 2, and a plurality if instances of audio focus objects are depicted as 314 in Figure 3. The priority order can be derived based on a multitude of factors such as; the audio focus object priority attribute included with the metadata from the audio format processor 200 which may have been derived in conjunction with an input from a user, the available coding bandwidth/transmission bandwidth, and the relative prominence of an audio focus object (in other words how strong an audio event captured by the particular audio focus).

For example, a first audio focus object may have a priority attribute within its metadata set to a higher priority value than the priority value of the priority attribute within the metadata of a second audio focus object. This can be implemented by the priority attribute of the first audio focus object having a lower numerical index value than the priority attribute of the second audio focus object. Consequently the relative indexing of the respective priority attribute of each audio focus object would allow the audio focus objects to be ordered in terms of the respective priority attributes.

It is to be appreciated that dynamic priority allocation of each audio focus object 214 can have the advantageous effect of being able to track those audio focus directions and hence those audio focus objects 314 which have the largest relative prominence in the audio scene. Accordingly, this enables the changing allocation of higher priority indices to continually track the changing relative prominence of the audio focus objects 314 making up the audio scene.

Consequently the priority handler 302 may then use the priority index value of a priority attribute associated with each audio focus object to determine which audio focus object 214 will be encoded. The number of audio focus objects 314 can be influenced by the available coding bandwidth. For instance when the available coding bandwidth is less than the coding bandwidth required to encode all audio focus objects 314, then the priority handler 302 may determine that only a subset of higher priority audio focus objects are to be encoded by the encoder 300.

In some embodiments the encoder 220 may be arranged to combine audio focus objects 314. This may be applicable if the audio focus objects 314 have similar directions, in other words the directional metadata values are close enough such that the audio focus objects 314 are deemed to have the same direction. Combining audio focus objects 314 in this manner would be advantageous in circumstances where the available coding bandwidth is particularly limited.

It is to be appreciated that the default mode of operation of the encoder 220 may comprise encoding the baseline spatial audio signal 205 and encoding either all audio focus objects 314 or a subset of audio focus objects in accordance with the priority attribute of each audio focus object as explained above. However there may be particular operating instances when it is only necessary to encode and transmit an audio focus effect captured as audio focus objects 314. A particular scenario may be an audio scene comprising conversational speech, in which the ambience or background can be of lower significance. In such instances the audio encoder may be arranged to only encode (and transmit) the audio focus objects 314 which are "focused" towards the speech event within the audio scene. This scenario may prove to be useful during periods of network congestion in which "dropping" the baseline immersive audio signal 205 (in other words the ambience of the audio scene) may have the least effect on the user's experience. For this kind of scenario a gain control function may be used to ensure that the remaining audio focused element should have the same auditory level as the combination of the baseline audio scene signal 205 and audio object focus objects 314.

Alternatively, the audio focus object 214 may be modified prior to encoding to also include the corresponding directional part of the baseline spatial audio scene 205. In other words all other directions can be dropped and then downmix the baseline spatial audio scene in the direction of the audio focus and the audio focus object into a single audio channel/object (optionally with metadata).

With reference to Figure 4 there is shown for completeness an example of an audio decoder 500 which can be arranged to decode and render bit streams containing an encoded baseline audio scene signal 5011 and one or many encoded audio focus objects 5012. The audio decoder 500 can be arranged to read any audio focus signalling 5010 which accompanies the encoded baseline audio scene signal 5011 and encoded audio focus objects 5012.

The audio focus signalling information 5010 may be used to assist in the decoding of the encoded audio focus objects 5012 and provide information about the audio focus object 214 to a user interface at the receiving device. As mentioned above each audio focus object can be accompanied with a metadata structure in which there is an audio focus object priority attribute associated with the audio focus object. Accordingly the encoded audio focus objects 5012 may be decoded in the relative order of their priority attribute values, such that the higher priority ordered encoded audio focus objects are decoded in preference to lower priority ordered encoded audio focus objects. For instance, the number of encoded audio focus objects decoded by the audio decoder 500 may be determined by the available processing capacity, in such instances the higher priority ordered encoded audio focus objects may be decoded in preference to lower priority ordered encoded audio focus objects.

The parsing of accompanying signalling 5010 for the encoded audio focus objects 5012 is shown by the processing structure or software components 501 in Figure 4. Decoding of the encoded audio focus objects 5012 and decoding of the encoded baseline spatial audio scene signal 5011 are shown by the processing structures or software components 503 and 505 respectively. Within the decoder 500 there may also be found a processing structure or software components which combines by downmixing the decoded baseline spatial audio scene stream 5014 with a number of decoded audio focus objects 5016 to produce a rendered audio output 5013. This is shown as the processing structure or software components 507 in Figure 4. The downmixing process and rendering process 507 may by performed in conjunction with a user input, whereby the user can select which audio focus object to have in the rendered audio stream. The user input decision can be made dependent on the audio-focus signalling information presented to the user via a user interface. For instance each audio focus object 215 may have been focussed, at the encoder, onto different audio events. Therefore with the assistance of the accompanying audio focus signalling information 5020 the user can select which particular audio event to listen or focus upon by selecting the corresponding encoded audio focus objects 5012 which convey the particular audio events of interest. For instance the encoded audio scene may comprise a number of different speakers. In this case the ambience of the audio scene may be captured by the baseline spatial audio scene signal 205 and encoded as the encoded spatial audio scene signal 5011, and particular speakers may be each captured and encoded as an audio focus object. At the decoder, the user may choose to focus on one particular speaker, and in this case the user may instruct the downmixing and generation processing entity 507 to produce a rendered audio stream 5013 comprising a mix of the decoded immersive audio baseline signal and the decoded audio focus object associated with the chosen speaker.

In some embodiments, the maximum number of transmitted audio focus objects may be at least one. Therein it may be provided to the user a user interface, where the user may select whether or not to apply the audio focus as provided by the at least one audio focus object. In addition, it may be provided as part of the user interface, e.g., a slider, whereby the user can select the amount of audio focus effect to be applied in downmix generation and rendering 507 in order to render the audio signal 5013.

For the methods presented herein, it is in practice not relevant if the audio signals and/or the spatial metadata are obtained from the microphone signals directly, or indirectly, for example, via microphone array spatial processing or through encoding, transmission/storing and decoding. With respect to Figure 5 an example electronic device 1200 which may be used as at least part of the capture and/or a playback apparatus is shown. The device may be any suitable electronics device or apparatus. For example in some embodiments the device 1200 is a virtual or augmented reality capture device, a mobile device, user equipment, tablet computer, computer, connected headphone device, a smart speaker and immersive capture solution, audio playback apparatus, etc.

The device 1200 may comprise a microphone array 1201. The microphone array 1201 may comprise a plurality (for example a number M) of microphones. However it is understood that there may be any suitable configuration of microphones and any suitable number of microphones. In some embodiments the microphone array 1201 is separate from the apparatus and the audio signals transmitted to the apparatus by a wired or wireless coupling.

The microphones may be transducers configured to convert acoustic waves into suitable electrical audio signals. In some embodiments the microphones can be solid state microphones. In other words the microphones may be capable of capturing audio signals and outputting a suitable digital format signal. In some other embodiments the microphones or microphone array 1201 can comprise any suitable microphone or audio capture means, for example a condenser microphone, capacitor microphone, electrostatic microphone, Electret condenser microphone, dynamic microphone, ribbon microphone, carbon microphone, piezoelectric microphone, or microelectrical-mechanical system (MEMS) microphone. The microphones can in some embodiments output the audio captured signal to an analogue-to-digital converter (ADC) 1203.

The device 1200 may further comprise an analogue-to-digital converter 1203. The analogue-to-digital converter 1203 may be configured to receive the audio signals from each of the microphones in the microphone array 1201 and convert them into a format suitable for processing. In some embodiments where the microphones are integrated microphones the analogue-to-digital converter is not required. The analogue-to-digital converter 1203 can be any suitable analogue-to-digital conversion or processing means. The analogue-to-digital converter 1203 may be configured to output the digital representations of the audio signals to a processor 1207 or to a memory 1211.

In some embodiments the device 1200 comprises at least one processor or central processing unit 1207. The processor 1207 can be configured to execute various program codes. The implemented program codes can comprise, for example, SPAC analysis, beamforming, spatial synthesis and encoding of individual audio signal streams based on a dependency metadata as described herein.

In some embodiments the device 1200 comprises a memory 1211. In some embodiments the at least one processor 1207 is coupled to the memory 1211. The memory 1211 can be any suitable storage means. In some embodiments the memory 1211 comprises a program code section for storing program codes implementable upon the processor 1207. Furthermore in some embodiments the memory 1211 can further comprise a stored data section for storing data, for example data that has been processed or to be processed in accordance with the embodiments as described herein. The implemented program code stored within the program code section and the data stored within the stored data section can be retrieved by the processor 1207 whenever needed via the memory-processor coupling.

In some embodiments the device 1200 comprises a user interface 1205. The user interface 1205 can be coupled in some embodiments to the processor 1207. In some embodiments the processor 1207 can control the operation of the user interface 1205 and receive inputs from the user interface 1205. In some embodiments the user interface 1205 can enable a user to input commands to the device 1200, for example via a keypad, gestures, or voice commands. In some embodiments the user interface 205 can enable the user to obtain information from the device 1200. For example the user interface 1205 may comprise a display configured to display information from the device 1200 to the user. The user interface 1205 can in some embodiments comprise a touch screen or touch interface capable of both enabling information to be entered to the device 1200 and further displaying information to the user of the device 1200.

In some implements the device 1200 comprises a transceiver 1209. The transceiver 1209 in such embodiments can be coupled to the processor 1207 and configured to enable a communication with other apparatus or electronic devices, for example via a wireless communications network. The transceiver 1209 or any suitable transceiver or transmitter and/or receiver means can in some embodiments be configured to communicate with other electronic devices or apparatus via a wire or wired coupling.

The transceiver 1209 can communicate with further apparatus by any suitable known communications protocol. For example in some embodiments the transceiver 1209 or transceiver means can use a suitable universal mobile telecommunications system (UMTS) protocol, a wireless local area network (WLAN) protocol such as for example IEEE 802.X, a suitable short-range radio frequency communication protocol such as Bluetooth, or infrared data communication pathway (IRDA).

In some embodiments the device 1200 may be employed as a synthesizer apparatus. As such the transceiver 1209 may be configured to receive the audio signals and determine the spatial metadata such as position information and ratios, and generate a suitable audio signal rendering by using the processor 1207 executing suitable code. The device 1200 may comprise a digital-to-analogue converter 1213. The digital-to-analogue converter 1213 may be coupled to the processor 1207 and/or memory 1211 and be configured to convert digital representations of audio signals (such as from the processor 1207 following an audio rendering of the audio signals as described herein) to a suitable analogue format suitable for presentation via an audio subsystem output. The digital-to-analogue converter (DAC) 1213 or signal processing means can in some embodiments be any suitable DAC technology.

Furthermore the device 1200 can comprise in some embodiments an audio subsystem output 1215. An example, such as shown in Figure 5, may be where the audio subsystem output 1215 is an output socket configured to enabling a coupling with headphones 121. However the audio subsystem output 1215 may be any suitable audio output or a connection to an audio output. For example the audio subsystem output 1215 may be a connection to a multichannel speaker system.

In some embodiments the digital to analogue converter 1213 and audio subsystem 1215 may be implemented within a physically separate output device. For example the DAC 1213 and audio subsystem 1215 may be implemented as cordless earphones communicating with the device 1200 via the transceiver 1209.

Although the device 1200 is shown having both audio capture and audio rendering components, it would be understood that in some embodiments the device 1200 can comprise just the audio capture or audio render apparatus elements.

In general, the various embodiments of the invention may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

The embodiments of this invention may be implemented by computer software executable by a data processor of the electronic device, such as in the processor entity, or by hardware, or by a combination of software and hardware. Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD.

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multi-core processor architecture, as non-limiting examples.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs which can automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

The foregoing description has provided by way of exemplary and non-limiting examples a full and informative description of the exemplary embodiment of this invention. However, various modifications and adaptations may become apparent to those skilled in the relevant arts in view of the foregoing description, when read in conjunction with the accompanying drawings and the appended claims. However, the scope of the invention is uniquely defined in the appended claims.

## Claims

1. An apparatus comprising:
means for adding (219) an audio signal type attribute to an audio focus object (214), wherein the audio focus object (214) comprises a downmixed audio difference signal (210) and direction information (206) relating to an audio focus direction associated with the audio focus object (214), and wherein the audio signal type attribute identifies that an encoded audio signal is an audio focus object (214), wherein the apparatus is **characterised by** having:
means for receiving at least two microphone audio signals (101, 111) for audio signal processing, wherein the audio signal processing comprises a spatial signal processing (113) and beamforming processing (105);
means for determining (117) an audio scene signal (112, 205) based on the spatial signal processing (113);
means for determining (107) an audio focused signal (102, 207) based at least in part on the beamforming processing (105);
means for determining (209) a difference signal (210) between the audio scene signal (205) and the audio focused signal (207); and
means for forming the downmixed audio difference signal by downmixing (209) the difference signal (210)

2. The apparatus as claimed in Claim 1 further comprising;
means for adding an audio focus object priority attribute to the audio focus object, wherein the audio focus priority attribute indicates an encoding and/or decoding priority of the audio focus object relative to an encoding and/or decoding priority of other audio focus objects.

3. The apparatus as claimed in Claim 2, further comprises:
means for adding a further audio signal type attribute and further audio focus object priority attribute to a further audio focus object, wherein the further audio focus object comprises a further downmixed audio difference signal and further direction information relating to an audio focus direction associated with the further audio focus object; and
means for encoding the downmixed audio difference signal in preference to the further downmixed audio difference signal in the case the audio focus object priority attribute of the audio focus object indicates a higher order of priority than the further audio focus object priority attribute of the further audio focus object.

4. The apparatus as claimed in Claim 3, wherein the priority indicated by the audio focus object priority attribute and the priority indicated by the further audio focus object priority attribute are at least in part determined via a user input.

5. The apparatus as claimed in Claims 3 and 4, wherein the priority indicated by the audio focus object priority attribute and the priority indicated by the further audio focus object priority attribute are at least in part determined by an available transmission bandwidth of a communication channel.

6. The apparatus as claimed in Claims 2 to 5, wherein the audio signal type attribute, the direction information and the audio focus object priority attribute are part of a metadata structure of the audio focus object.

7. A method comprising:
adding (219) an audio signal type attribute to an audio focus object (214), wherein the audio focus object (214) comprises a downmixed audio difference signal (210) and direction information (206) relating to an audio focus direction associated with the audio focus object (214), and wherein the audio signal type attribute identifies that an encoded audio signal is an audio focus object (214), wherein the method is **characterised in that** the downmixed audio difference signal (210) is formed (209) by:
receiving at least two microphone audio signals (101, 111) for audio signal processing, wherein the audio signal processing comprises a spatial signal processing (113) and beamforming processing (105);
determining (117) an audio scene signal (112, 205) based on the spatial signal processing (113);
determining (107) an audio focused signal (102, 207) based at least in part on the beamforming processing (105);
determining (209) a difference signal (210) between the audio scene signal (205) and the audio focused signal (207) ; and
downmixing (209) the difference signal (210).

8. The method as claimed in Claim 7 further comprising;
adding an audio focus object priority attribute to the audio focus object, wherein the audio focus priority attribute indicates an encoding and/or decoding priority of the audio focus object relative to an encoding and/or decoding priority of other audio focus objects.

9. The method as claimed in Claim 8, further comprising:
adding a further audio signal type attribute and further audio focus object priority attribute to a further audio focus object, wherein the further audio focus object comprises a further downmixed audio difference signal and further direction information relating to an audio focus direction associated with the further audio focus object; and
encoding the downmixed audio difference signal in preference to the further downmixed audio difference signal in the case the audio focus object priority attribute of the audio focus object indicates a higher order of priority than the further audio focus object priority attribute of the further audio focus object.

## Patentansprüche

1. Vorrichtung, die Folgendes umfasst:
Mittel zum Hinzufügen (219) eines Audiosignaltypattributs zu einem Audiofokusobjekt (214), wobei das Audiofokusobjekt (214) ein heruntergemischtes Audiodifferenzsignal (210) und Richtungsinformationen (206) umfasst, die sich auf eine Audiofokusrichtung beziehen, die mit dem Audiofokusobjekt (214) verknüpft ist, und wobei das Audiosignaltypattribut identifiziert, dass ein codiertes Audiosignal ein Audiofokusobjekt (214) ist, wobei die Vorrichtung durch Aufweisen von Folgendem gekennzeichnet ist:
Mittel zum Empfangen von mindestens zwei Mikrofonaudiosignalen (101, 111) für eine Audiosignalverarbeitung, wobei die Audiosignalverarbeitung eine räumliche Signalverarbeitung (113) und eine Strahlformungsverarbeitung (105) umfasst;
Mittel zum Bestimmen (117) eines Audioszenensignals (112, 205) auf Basis der räumlichen Signalverarbeitung (113);
Mittel zum Bestimmen (107) eines audiofokussierten Signals (102, 207) mindestens teilweise auf Basis der Strahlformungsverarbeitung (105);
Mittel zum Bestimmen (209) eines Differenzsignals (210) zwischen dem Audioszenensignal (205) und dem audiofokussierten Signal (207); und
Mittel zum Bilden des heruntergemischten Audiodifferenzsignals durch Heruntermischen (209) des Differenzsignals (210)

2. Vorrichtung nach Anspruch 1, die ferner Folgendes umfasst;
Mittel zum Hinzufügen eines Audiofokusobjektprioritätsattributs zum Audiofokusobjekt, wobei das Audiofokusprioritätsattribut eine Codier- und/oder eine Decodierpriorität des Audiofokusobjekts relativ zu einer Codierund/oder einer Decodierpriorität von anderen Audiofokusobjekten anzeigt.

3. Vorrichtung nach Anspruch 2, die ferner Folgendes umfasst:
Mittel zum Hinzufügen eines weiteren Audiosignaltypattributs und eines weiteren Audiofokusobjektprioritätsattributs zu einem weiteren Audiofokusobjekt, wobei das weitere Audiofokusobjekt ein weiteres heruntergemischtes Audiodifferenzsignal und weitere Richtungsinformationen umfasst, die sich auf eine Audiofokusrichtung beziehen, die mit dem weiteren Audiofokusobjekt verknüpft ist; und
Mittel zum Codieren des heruntergemischten Audiodifferenzsignals bevorzugt gegenüber dem weiteren heruntergemischten Audiodifferenzsignal in dem Fall, in dem das Audiofokusobjektprioritätsattribut des Audiofokusobjekts eine höhere Prioritätsreihenfolge als das weitere Audiofokusobjektprioritätsattribut des weiteren Audiofokusobjekts anzeigt.

4. Vorrichtung nach Anspruch 3, wobei die vom Audiofokusobjektprioritätsattribut angezeigte Priorität und die vom weiteren Audiofokusobjektprioritätsattribut angezeigte Priorität mindestens teilweise via eine Benutzereingabe bestimmt werden.

5. Vorrichtung nach den Ansprüchen 3 und 4, wobei die vom Audiofokusobjektprioritätsattribut angezeigte Priorität und die vom weiteren Audiofokusobjektprioritätsattribut angezeigte Priorität mindestens teilweise von einer verfügbaren Übertragungsbandbreite eines Kommunikationskanals bestimmt werden.

6. Vorrichtung nach einem der Ansprüche 2 bis 5, wobei das Audiosignaltypattribut, die Richtungsinformationen und das Audiofokusobjektprioritätsattribut Teil einer Metadatenstruktur des Audiofokusobjekts sind.

7. Verfahren, das Folgendes umfasst:
Hinzufügen (219) eines Audiosignaltypattributs zu einem Audiofokusobjekt (214), wobei das Audiofokusobjekt (214) ein heruntergemischtes Audiodifferenzsignal (210) und Richtungsinformationen (206) umfasst, die sich auf eine Audiofokusrichtung beziehen, die mit dem Audiofokusobjekt (214) verknüpft ist, und wobei das Audiosignaltypattribut identifiziert, dass ein codiertes Audiosignal ein Audiofokusobjekt (214) ist, wobei das Verfahren **dadurch gekennzeichnet ist, dass** das heruntergemischte Audiodifferenzsignal (210) durch Folgendes gebildet wird (209):
Empfangen von mindestens zwei Mikrofonaudiosignalen (101, 111) für eine Audiosignalverarbeitung, wobei die Audiosignalverarbeitung eine räumliche Signalverarbeitung (113) und eine Strahlformungsverarbeitung (105) umfasst;
Bestimmen (117) eines Audioszenensignals (112, 205) auf Basis der räumlichen Signalverarbeitung (113);
Bestimmen (107) eines audiofokussierten Signals (102, 207) mindestens teilweise auf Basis der Strahlformungsverarbeitung (105) ;
Bestimmen (209) eines Differenzsignals (210) zwischen dem Audioszenensignal (205) und dem audiofokussierten Signal (207); und
Heruntermischen (209) des Differenzsignals (210).

8. Verfahren nach Anspruch 7, das ferner Folgendes umfasst;
Hinzufügen eines Audiofokusobjektprioritätsattributs zum Audiofokusobjekt, wobei das Audiofokusprioritätsattribut eine Codier- und/oder eine Decodierpriorität des Audiofokusobjekts relativ zu einer Codier- und/oder einer Decodierpriorität von anderen Audiofokusobjekten anzeigt.

9. Verfahren nach Anspruch 8, das ferner Folgendes umfasst:
Hinzufügen eines weiteren Audiosignaltypattributs und eines weiteren Audiofokusobjektprioritätsattributs zu einem weiteren Audiofokusobjekt, wobei das weitere Audiofokusobjekt ein weiteres heruntergemischtes Audiodifferenzsignal und weitere Richtungsinformationen umfasst, die sich auf eine Audiofokusrichtung beziehen, die mit dem weiteren Audiofokusobjekt verknüpft ist; und
Codieren des heruntergemischten Audiodifferenzsignals bevorzugt gegenüber dem weiteren heruntergemischten Audiodifferenzsignal in dem Fall, in dem das Audiofokusobjektprioritätsattribut des Audiofokusobjekts eine höhere Prioritätsreihenfolge als das weitere Audiofokusobjektprioritätsattribut des weiteren Audiofokusobjekts anzeigt.

## Revendications

1. Appareil comprenant :
des moyens pour ajouter (219) un attribut de type signal audio à un objet de focalisation audio (214), dans lequel l'objet de focalisation audio (214) comprend un signal de différence audio après mixage réducteur (210) et des informations de direction (206) relatives à une direction de focalisation audio associée à l'objet de focalisation audio (214), et dans lequel l'attribut de type signal audio identifie qu'un signal audio codé est un objet de focalisation audio (214), dans lequel l'appareil est **caractérisé en ce qu'**il a :
des moyens pour recevoir au moins deux signaux audio de microphone (101, 111) pour le traitement de signal audio, dans lequel le traitement de signal audio comprend un traitement de signal spatial (113) et un traitement de formation de faisceau (105) ;
des moyens pour déterminer (117) un signal de scène audio (112, 205) sur la base du traitement de signal spatial (113) ;
des moyens pour déterminer (107) un signal focalisé audio (102, 207) en se basant au moins en partie sur le traitement de formation de faisceau (105) ;
des moyens pour déterminer (209) un signal de différence (210) entre le signal de scène audio (205) et le signal focalisé audio (207) ; et
des moyens pour former le signal de différence audio après mixage réducteur par mixage réducteur (209) du signal de différence (210).

2. Appareil selon la revendication 1, comprenant en outre ;
des moyens pour ajouter un attribut de priorité d'objet de focalisation audio à l'objet de focalisation audio, dans lequel l'attribut de priorité de focalisation audio indique une priorité de codage et/ou de décodage de l'objet de focalisation audio par rapport à une priorité de codage et/ou de décodage d'autres objets de focalisation audio.

3. Appareil selon la revendication 2, comprenant en outre :
des moyens pour ajouter un attribut de type signal audio supplémentaire et un attribut de priorité d'objet de focalisation audio supplémentaire à un objet de focalisation audio supplémentaire, dans lequel l'objet de focalisation audio supplémentaire comprend un signal de différence audio supplémentaire après mixage réducteur et des informations de direction supplémentaires relatives à une direction de focalisation audio associée à l'objet de focalisation audio supplémentaire ; et
des moyens pour coder le signal de différence audio après mixage réducteur, de préférence en signal de différence audio supplémentaire après mixage réducteur dans le cas où l'attribut de priorité d'objet de focalisation audio de l'objet de focalisation audio indique un ordre de priorité plus élevé que l'attribut de priorité d'objet de focalisation audio supplémentaire de l'objet de focalisation audio supplémentaire.

4. Appareil selon la revendication 3, dans lequel la priorité indiquée par l'attribut de priorité d'objet de focalisation audio et la priorité indiquée par l'attribut de priorité d'objet de focalisation audio supplémentaire sont au moins en partie déterminées via une entrée utilisateur.

5. Appareil selon les revendications 3 et 4, dans lequel la priorité indiquée par l'attribut de priorité d'objet de focalisation audio et la priorité indiquée par l'attribut de priorité d'objet de focalisation audio supplémentaire sont au moins en partie déterminées par une largeur de bande de transmission disponible d'un canal de communication.

6. Appareil selon les revendications 2 à 5, dans lequel l'attribut de type signal audio, les informations de direction et l'attribut de priorité d'objet de focalisation audio font partie d'une structure de métadonnées de l'objet de focalisation audio.

7. Procédé comprenant :
l'ajout (219) d'un attribut de type signal audio à un objet de focalisation audio (214), dans lequel l'objet de focalisation audio (214) comprend un signal de différence audio après mixage réducteur (210) et des informations de direction (206) relatives à une direction de focalisation audio associée à l'objet de focalisation audio (214), et dans lequel l'attribut de type signal audio identifie qu'un signal audio codé est un objet de focalisation audio (214), dans lequel le procédé est **caractérisé en ce que** le signal de différence audio après mixage réducteur (210) est formé (209) par :
la réception d'au moins deux signaux audio de microphone (101, 111) pour le traitement de signal audio, dans lequel le traitement de signal audio comprend un traitement de signal spatial (113) et un traitement de formation de faisceau (105) ;
la détermination (117) d'un signal de scène audio (112, 205) sur la base du traitement de signal spatial (113) ;
la détermination (107) d'un signal focalisé audio (102, 207) en se basant au moins en partie sur le traitement de formation de faisceau (105) ;
la détermination (209) d'un signal de différence (210) entre le signal de scène audio (205) et le signal focalisé audio (207) ; et
le mixage réducteur (209) du signal de différence (210).

8. Procédé selon la revendication 7 comprenant en outre ;
l'ajout d'un attribut de priorité d'objet de focalisation audio à l'objet de focalisation audio,
dans lequel l'attribut de priorité de focalisation audio indique une priorité de codage et/ou de décodage de l'objet de focalisation audio par rapport à une priorité de codage et/ou de décodage d'autres objets de focalisation audio.

9. Procédé selon la revendication 8, comprenant en outre :
l'ajout d'un attribut de type signal audio supplémentaire et un attribut de priorité d'objet de focalisation audio supplémentaire à un objet de focalisation audio supplémentaire, dans lequel l'objet de focalisation audio supplémentaire comprend un signal de différence audio supplémentaire après mixage réducteur et des informations de direction supplémentaires relatives à une direction de focalisation audio associée à l'objet de focalisation audio supplémentaire ; et
le codage du signal de différence audio après mixage réducteur, de préférence en signal de différence audio supplémentaire après mixage réducteur dans le cas où l'attribut de priorité d'objet de focalisation audio de l'objet de focalisation audio indique un ordre de priorité plus élevé que l'attribut de priorité d'objet de focalisation audio supplémentaire de l'objet de focalisation audio supplémentaire.
